# EUROPÄISCHE PATENTSCHRIFT

(11) **EP 2 364 246 B1**
(45) Veröffentlichungstag und Bekanntmachung des Hinweises auf die Patenterteilung: **09.11.2016**
(21) Anmeldenummer: 09764711.9
(22) Anmeldetag: 09.11.2009
(51) Int. Cl.: B29B 17/00, B29B 17/02, C08J 11/04, C08J 11/06, B03D 1/14, B03B 9/06, B03B 5/28

(54) **VERFAHREN UND VORRICHTUNG ZUM ABTRENNEN EINZELNER WERTSTOFFE AUS GEMISCHTEM, INSBESONDERE ZERKLEINERTEM, KUNSTOFFABFALL**
METHODS AND DEVICE FOR SEPARATING INDIVIDUAL VALUABLE MATERIALS FROM MIXED, IN PARTICULAR MILLED, PLASTIC WASTE
PROCÉDÉS ET DISPOSITIF DE SÉPARATION DE MATIÈRES INDIVIDUELLES VALORISABLES À PARTIR DE DÉCHETS DE MATIÈRES PLASTIQUES MÉLANGÉS, EN PARTICULIER FRAGMENTÉS

(30) Priorität: 07.11.2008 DE 102008056311
(43) Veröffentlichungstag der Anmeldung: 14.09.2011
(73) Patentinhaber: APK Aluminium und Kunststoffe AG, 06217 Merseburg (DE)
(72) Erfinder: LINDNER, Wolfgang, 41539 Dormagen (DE)
(74) Vertreter: Grosse Schumacher Knauer von Hirschhausen
(86) Internationale Anmeldenummer: PCT/EP2009/007991
(87) Internationale Veröffentlichungsnummer: WO 2010/052016

(56) Entgegenhaltungen:
- EP-A2- 0 557 816
- EP-A2- 0 790 545
- WO-A1-94/21382
- WO-A1-99/61158
- DE-A1- 19 637 031
- DE-A1- 19 751 441

## Beschreibung

### Gebiet der Erfindung

Die Erfindung betrifft zwei Verfahren und eine Anlage zum Abtrennen einzelner Wertstoffe aus gemischtem, insbesondere zerkleinertem Kunststoffabfall, der Folien, Verbundfolien und Hartkunststoffteile sowie ggf. Störstoffe enthält.

### Hintergrund der Erfindung und Stand der Technik

Gemischter Kunststoffabfall enthält neben einer Vielzahl unterschiedlicher Kunststoffarten üblicherweise weitere zum Teil fest miteinander verbundene Wertstoffe sowie Störstoffe.

Im Stand der Technik sind zwar viele einzelne Verfahrensschritte zum Recyceln eines derartigen Kunststoffabfalls bekannt, wie etwa das mechanische Zerkleinern des Kunststoffabfalls in ein Mahlgut oder das Trennen zweier Komponenten mittels Schwimm-Sink-Trennung oder mittels der neuen Nah-Infrarot-Trenntechnik, allerdings haftet den bekannten Verfahren der Nachteil an, dass eine hohe Trennschärfe, die Vorrausetzung für die Gewinnung von Kunststoffen hoher und konstanter Qualität ist, für solche gemischte Kunststoffabfälle nicht erzielbar ist.

Für eine nachhaltige Wiederverwertung ist es notwendig, die einzelnen Wertstoffe möglichst sortenrein zu trennen, damit sie frei von Verunreinigungen Neuware erfolgreich in Teilmärkten ersetzen können und somit signifikant sowohl zur Wettbewerbsfähigkeit des Endproduktes wie auch zur Ressourcenschonung beitragen können.

Handelt es sich beim gemischten Kunststoffabfall beispielsweise um Rejekte von Flüssigkeitskartons für Getränke wie Milch, Saft oder dergleichen, die beim Abtrennen der Papierfasern zur Pappe-Produktion in der Papierfabrik anfallen, dann sind in diesem Mischkunststoff Folien, Verbundfolien, Hartkunststoffiteile und restliche Papierfasern enthalten. Die Folien bestehen überwiegend aus Low Density Polyethylen (LDPE), die Verbundfolien aus Aluminiumfolie und LDPE-Folie, und die Hartkunststoffe der Ausgüsse und Verschlusskappen aus High Density Polyethylen (HDPE) sowie zum geringeren Teil aus Polypropylen (PP). Darüberhinaus enthalten einige Getränkekartons auch einen mengenmäßig unbedeutenden Anteil an Folienstreifen aus PA oder PET, die zum Abdichten der Verbindungsnähte benutzt werden.

Zwar sind viele einzelne Verfahrensschritte, die beim Recyceln eines derartigen Mischkunststoffs eingesetzt werden könnten, bekannt, in der Summe haben sie jedoch bisher nicht dazu geführt, dass die mengenmäßig relevanten Kunststofffraktionen der Getränkekartons bzw. der Rejekte in irgendeinem Verfahren in ihre einzelnen Wertstofffraktionen derart getrennt werden, dass sie wieder als reine Wertstoffe in den Kreislauf zurückgeführt werden können.

Die gängige Praxis bei der Verwertung der überwiegenden Menge der Getränkekartonrejekte ist deren energetische Nutzung im Zement- oder/und Müllofen. Von den im statistischen Mittel in den Getränkekartonrejekten enthaltenen ca. 106 MJ/kg an kumuliertem Energieinhalt werden im Fall deren Verwertung im Zementofen trotz dessen sehr gutem Energienutzungswirkungsgrades gerade einmal ca. 23 MJ/kg-Rejekt energetisch genutzt. Bei der energetischen Nutzung der Getränkekartonrejekte gehen also ca. 83 MJ/kg der in ihnen enthalten kumulierten Energieinhalte verloren, was ca. 78% entspricht.

Als ältestes praktiziertes stoffliches Verwertungsverfahren für diese Rejekte ist das sogenannte Corenso-Verfahren (Finnland) zu nennen. Es enthält neben einer energetischen Nutzung der Kunststoffkomponenten der Getränkekartons zumindest auch eine stoffliche Verwertung der Aluminiumanteile. Gemäß VDI-Nachrichten vom 10.6.2005 werden in diesem Verfahren die Rejekte in einem Gasreaktor bei Temperaturen oberhalb 400 °C einer Pyrolyse unterworfen. Dabei beginnt das Polyethylen ab 400°C zu vergasen (Pyrolysegas), wobei das Aluminium bei dieser Temperatur in fester Form erhalten bleibt. Das brennbare Pyrolysegas liefert anschließend bei seiner Verbrennung elektrische und Wärmeenergie. Das Aluminium fällt als Agglomerat an und ist dabei zwangsweise von den nicht vergasten Störstoffen verunreinigt. Nach über 10-jährigem Lauf der Anlage kann festgestellt werden, dass diese Technik weltweit nicht noch einmal installiert worden ist, obwohl weltweit ein Interesse daran besteht, die Rejekte der Getränkekarton werkstofflich zu verwerten. Im Gegenteil muss festgestellt werden, dass die Corenso-Anlage in 2009 nicht mehr produzieren wird.

Ein neues Verfahren zur Rejektverwertung wurde in Brasilien nahe Sao Paolo in einer Pilotanlage Betrieb genommen ("Mit dem Ziegelstein gegen den Klimawandel", Zeitschrift Getränkeindustrie 11/2007, S. 10ff). In diesem Verfahren werden die Rejekte mit einem über 1100°C heißen Plasmastrahl behandelt. Dabei werden die Kunststoffe zu einem wegen der Vielzahl der in den Rejekten vorhandenen Kunststofftypen minderwertigem Ethylenglykol zersetzt, das in einer Raffinerie aufgearbeitet werden muss. Das Aluminium der Rejekte verlässt in verwertbarer Barrenform den Prozess. Auch wenn die Polyolefine der Rejekte als minderwertiges Ethylenglykol stofflich zurückgewonnen werden, geht doch ein sehr großer Anteil der zu ihrer Neuwarenherstellung aufgewendeten kumulierten Energie wegen des sehr hohen Energieaufwandes dieses Verfahrens einerseits und des geringen Energieinhaltes des minderwertigen Glykols andererseits verloren.

Die DE 197 51 441 A1 beschreibt ein Verfahren zur Aufbereitung von PE-LD-haltigen Kunststoffabfällen, bei dem die Kunststoffabfälle einer Hitzebehandlung unterworfen werden, die zur vollständigen Lösung von PE-LD führt, während PE-HD oder PP nicht gelöst werden und getrennt einer weiteren Aufbereitung nach bekannten Verfahren, beispielsweise einer Granulierung oder einem weiteren Löseprozess bei höheren Temperaturen zugeführt werden.

Aus der EP 0 557 816 A2 sind ein Verfahren und eine Anlage zur Trennung zerkleinerter Kunststoffe bekannt, umfassend eine Einrichtung zum Abtrennen von Störstoffen von den Kunststoffen sowie eine nachgeschaltete Einrichtung zum Abtrennen von Folien einerseits von den formstabilen Kunststoffen andererseits. Die formstabilen Kunststoffe werden separat von den Folien weiterverarbeitet.

Aus der DE 196 37 031 A1 sind ein Verfahren und eine Anlage zur wirtschaftlichen und umweltgerechten Entsorgung von Reststoffen, die bei der Papierverarbeitung entstehen, bekannt, wobei aus den bei der Papierherstellung aussortierten Reststoffen besonders hochwertiger Faserstoff, Vlies oder Papier herstellbar ist.

Die WO 94/21382 betrifft ein Schwimm-Sink-Verfahren zum Trennen von Feststoffteilchen unterschiedlicher Dichte mittels einer Trennflüssigkeit.

### Zusammenfassung der Erfindung

Der Erfindung liegt daher die Aufgabe zu Grunde, Verfahren und eine Anlage zum Abtrennen einzelner Wertstoffe aus gemischtem, insbesondere zerkleinertem Kunststoffabfall, der Folien, Verbundfolien, Hartkunststoffe sowie ggf. Störstoffe enthält, zu schaffen, bei denen die Wertstoffe inklusive der eventuell vorhandenen Metallkomponenten von Kunststoff-Metallverbunden vergleichsweise kostengünstig mit hoher Trennschärfe und Reinheit aus dem Abfall wiedergewonnen werden können.

Diese Aufgabe wird entsprechend den Merkmalen der Ansprüche 1, 6 bzw. 15 gelöst.

Demnach werden Verfahren und eine Anlage zum Abtrennen einzelner Wertstoffe aus gemischtem, insbesondere zerkleinertem Kunststoffabfall, der Folien-, Verbundfolien- und Hartkunststoffteile sowie gegebenenfalls Störstoffe enthält, geschaffen, bei denen zunächst Störstoffe, soweit vorhanden, von den Kunststoffen abgetrennt und anschließend die Kunststoffe einzelnen Trennschritten unterzogen werden.

In der Ausführungsform nach Anspruch 6 wird der Kunststoffabfall mittels Luftsichtung in Folien und Verbundfolien einerseits und Hartkunststoffe andererseits getrennt, die Verbundfolien werden von den Folien getrennt, die Hartkunststoffe werden in ihre Kunststoffsorten getrennt, und wenigstens ein Trennschritt umfasst eine Schwimm-Sink-Trennung.

Hierzu kann der Kunststoffabfall, der zerkleinert in Form von Mahlgutteilchen vorliegen kann, zunächst einer mechanischen Trennvorrichtung zugeführt werden, welche unter Zuführung von Wasser oder trockenmechanisch die einzelnen Rejektkomponenten, die z. B. wegen der zuvor u.a. aus Transportgründen zweckmäßigerweise durchgeführten Ballenpressoperation innig miteinander verbunden worden waren, wieder vereinzelt und gleichzeitig von störenden leichten, kleinen Verunreinigungen, wie z.B. von Papieretiketten und Papierfasern, befreit. In vereinzeltem Zustand lassen sich dann auch mit Magneten Ferro-haltige Störstoffe sicher abtrennen. Gegebenenfalls kann ein Schwimm-Sink-Becken zum Abtrennen organischer Störstoffe verwendet werden, in dem die Störstoffe absinken und die Kunststoffe aufschwimmen.

Anschließend muss der Kunststoffabfall einer Luftsichtung unterworfen werden, um die Hartkunststoffe und ggf. vorhandene schwere Störstoffe als Schwerfraktion sowie die Folien und Verbundfolien als Leichtfraktion zu trennen.

Als Hartkunststoffe kommen in allen Ausführungsformen der Erfindung insbesondere eine oder mehrere der folgenden in Betracht. In der überwiegenden Zahl der Fälle handelt es sich bei den Hartkunststoffen um spritzgegossene Kunststoffendprodukte. Die mit den verschiedenen Varianten der Blasformtechnik (z.B. Spritzblastechnik) hergestellten Produkte werden die zweitstärkste Produktgruppe der so genannten Hartkunststoffe darstellen, zu denen als dritte Produktgruppe noch die gegenüber den Folien dickwandigen, tiefgezogenen Kunststoffendprodukte gehören. Wenn auch zwischen den verschiedenen Kunststofftypen selbst, welche für die verschiedenen Techniken der Hartkunststoffherstellung eingesetzt werden, Unterschiede in Bezug auf bevorzugte Viskosität und somit Molekulargewichtsverteilung bestehen, so unterscheidet sich die Gruppe der Hartkunststoffe insgesamt sehr deutlich in Bezug auf diese beiden Eigenschaften von denjenigen der Gruppe der Folienkunststoffsorten. Mit der Luftsichtung lassen sich demnach die Kunststoffabfallprodukte indirekt in Fraktionen unterschiedlicher Viskositätsbereiche aufteilen.

In der Ausführungsform nach Anspruch 6 werden die Hartkunststoffe (Schwerfraktion) wie auch die Folien und Verbundfolien (Leichtfraktion) nun jeweils getrennt und insbesondere in eigenen Aufbereitungslinien weiter aufbereitet, d.h. ggf. gereinigt und in ihre jeweiligen Wertstoffkomponenten aufgeteilt.

Dazu werden die zu trennenden Hartkunststoffe bzw. Folien/Verbundfolien als Teil einer zweckmäßigerweise entgasten Suspension jeweils getrennt und insbesondere einer eigenen Vorrichtung zum Schwimm-Sink-Trennen zugeführt.

Die Dichte des Trennmediums wird dabei vorzugsweise so gewählt, dass sie der Dichte am Schnittpunkt der beiden Dichteverteilungskurven der beiden mittels Schwimm-Sink-Trennen voneinander zu trennenden Fraktionen entspricht. Die beiden Dichtungsverteilungskurven können ermittelt werden, indem von einer ausreichend großen Anzahl, z.B. 200, von Mahlgutteilchen einzeln mit bekannten Methoden deren Dichte misst, zu entsprechenden kleinen Dichtefraktionen zusammenfasst, und die so erhaltenen Teilchen pro Dichtefraktion zu einer Verteilungskurve aufträgt. Ergibt sich keine Schnittstelle der beiden Dichtefraktionsverteilungskurven mit einem Minimum, eignet sich die Schwimm-Sink-Trennung nicht zur Trennung der beiden Fraktionen. Diese Bestimmung der optimalen Dichte kann erfindungsgemäß für jede Charge Kunststoffabfalls und bei Bedarf periodisch während des Recyclens einer Charge durchgeführt werden

Die entgaste Suspension kann auf zweierlei Arten hergestellt werden. Der bevorzugte Weg besteht darin, dass zuerst die Mahlgutteilchen in das Trennmedium eingerührt, also suspendiert werden, und danach diese Suspension insbesondere in einem separaten Behälter durch Anlegen eines Vakuums entgast wird. Die zweite Möglichkeit besteht darin, dass das Trennmedium zuerst alleine entgast wird, bevor es mit den Mahlgutteilchen zu einer Suspension verarbeitet wird. Bei dieser Methode besteht jedoch die Gefahr, dass bei dieser Suspensionsherstellung wieder zu viel Luft bei dem Rührprozess in die Suspension gerät und so die Entgasung nicht ausreichend sein wird.

Die mittels entgaster Suspension sowie Kenntnis der optimalen Trenndichte mit hoher Trennschärfe von den reinen Kunststofffolien mit Schwimm-Sink-Trenntechnik (z.B. mit der Trenntechnik gemäß EP 1618960 B1 oder mit bekannten Sortierzentrifugen z.B. der Fa. Flottweg) abgetrennten Fraktionen, die aus zwei oder mehreren Komponenten bestehen, die entweder aufgrund gleicher Dichte oder aufgrund mechanischer oder/und chemischer Bindungen als Mehrstoffverbunde vorliegen, können nun, sofern Menge und Wert einer der Komponenten es wirtschaftlich sinnvoll machen, mittels selektiver Löseverfahren im nächsten Prozessteilschritt so behandelt werden, dass mindestens eine weitere sortenreine hochwertige Werkstofffraktion gewonnen wird. "Selektives Löseverfahren" bedeutet dabei, dass ein Lösemittel und Prozessbedingungen so gewählt werden, dass nur der angezielte Kunststoff gelöst wird, so dass alle anderen Verbundkomponenten mittels der bekannten fest/flüssig Trenntechnik (Filter, Zentrifugen, Dekanter) aus der Lösung entfernt werden können, bevor das Polymer wieder aus der Lösung isoliert und zu einem neuen Kunststoff zusammengesetzt wird.

Falls eine der abgetrennten Luftsichter- oder /und Dichtetrennfraktionen, wie es im Falle der Getränkekartonrejekte gegeben ist, aus Metall-Kunststoffverbundfolienschnitzel besteht, wird diese Fraktion nach ihrer Abtrennung vorzugsweise ebenfalls der vorgenannten selektiven Lösemittelbehandlung unterzogen. In diesem Fall wird zweckmäßigerweise allein die LDPE-Kunststoffkomponente des Verbundes aufgelöst. Fremdkunststoffe dieser Fraktion, wie z.B. Polyamid und Polyethylenterephthalatteilchen, bleiben ungelöst und werden mit den freien Metall- und insbesondere Aluminiumfolienschnitzel mittels der bekannten fest/flüssige-Trenntechniken aus der Lösung entfernt.

Durch das erfindungsgemäße Verfahren können bei Mischkunststoffen alle Kunststofffraktionen als sortenreine Wertstoffe mit Reinheiten von über 97 Gew.-% und insbesondere über 99 Gew.-% zurückgewonnen werden.

Es hat sich nun überraschend gezeigt, dass mit konsequenter Anwendung des neuen Verfahrens die mengenmäßig wichtigsten Kunststoffanteile mit großer Reinheit und Qualitätskonstanz so wiedergewonnen werden, dass sie in Teilmärkten Kunststoffneuware ersetzen können. Die spezifische Prozessenergie für dieses Verfahren liegt im Bereich von unter 20 MJ/kg, so dass von den oben genannten 106 MJ/kg an kumulierten Energieinhalten der Rejekte bei Berücksichtigung des Materialschwundes noch ca. 70 % erhalten bleiben.

In der Ausführungsform nach Anspruch 1 wird nach einem Abtrennen etwaiger Störstoffe vom Kunststoffabfall der Kunststoffabfall in Hartkunststoffe und Folien einerseits und Verbundfolien andererseits getrennt, und anschließend werden die Hartkunststoffe von den Folien getrennt und die Hartkunststoffe in ihre Kunststoffsorten getrennt. Auch hier umfasst wenigstens ein Trennschritt eine Schwimm-Sink-Trennung, und die vorgenannten Details und/oder Weiterbildungen sind auch auf dieses Verfahren anwendbar.

Im Gegensatz zur vorstehend beschriebenen Ausführungsform werden also zunächst die Verbundfolien abgetrennt, und ggf. einer weiteren Verarbeitung zugeführt, und in einem zweiten Schritt die Folien von den Hartkunststoffen getrennt. Hierdurch ergibt sich überraschend eine weitere Verbesserung der Trennschärfe und des Durchsatzes.

Weitere Ausgestaltungen und Merkmale der Erfindung ergeben sich aus der nachfolgenden Beschreibung, den Figuren und den Ansprüchen.

### FIGURENBESCHREIBUNG

Fig. 1 zeigt einen ersten Teil eines Flussdiagramms einer ersten Ausführungsform des erfindungsgemäßen Verfahrens.
Fig. 2 zeigt den zweiten Teil des Flussdiagramms der Fig. 1.
Fig. 3 zeigt den dritten Teil des Flussdiagramms der Fig. 1.
Fig. 4, 5 und 6 illustrieren jeweils eine Dichteverteilungskurve.
Fig. 7 zeigt ein Flussdiagramm einer zweiten Ausführungsform des erfindungsgemäßen Verfahrens.
Fig. 8 zeigt ein Flussdiagramm einer ersten Stufe der erfindungsgemäßen Verfahren.
Fig. 9 zeigt eine Ausführungsform einer erfindungsgemäßen Anlage.

### DETAILLIERTE BESCHREIBUNG EINZELNER AUSFÜHRUNGSFORMEN

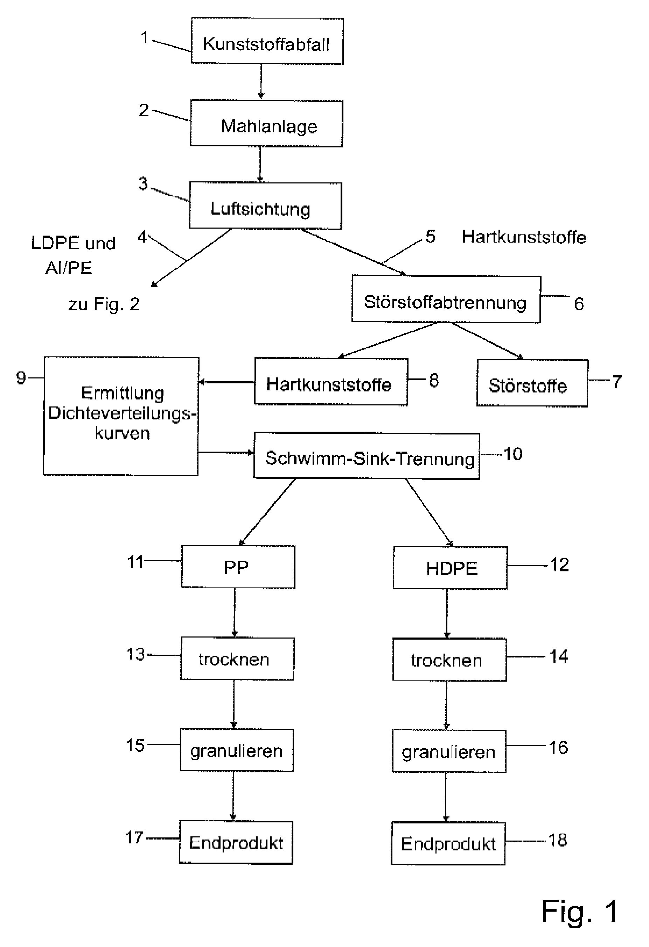

Die Beschreibung des erfindungsgemäßen Verfahrens erfolgt am nicht einschränkenden Beispiel der Verwertung von Flüssigkeitskartons unter Bezugnahme zunächst auf die Fig. 1 bis 3, wobei die technischen Details auf alle erfindungsgemäßen Verfahren und Anlagen übertragbar sind.

Dem Verfahren zugeführt, vgl. Schritt 1, wird zerkleinerter Kunststoffabfall bestehend aus geschredderten Flüssigkeitskartons. Dieses Mahlgut oder Rejekt enthält im wesentlichen Kunststofffolien, Verbundfolien aus Aluminium und Polyethylen (AI/PE-Folien), Hartkunststoffe wie etwa HD-PE und PP-Verschlüsse, geringe Mengen Papierfasern, geringe Mengen an technischen Kunststofffolien wie z.B. Polyamid und PET sowie geringe Mengen an Störstoffen wie Metallteilchen, Textilien, Sand etc.

In einem Schritt 2 erfolgt erfindungsgemäß eine trockenmechanische Abtrennung der restlichen Papierfasern von den Kunststoffen. Hierzu wird eine Mahlvorrichtung verwendet, die entweder aus einer dem Fachmann bekannten Friktionszentrifuge besteht, oder aus einer modifizierten Hammermühle, deren Sieblochgröße so gewählt werden kann, dass die Handteller großen Rejektfolien zwar vereinzelt, aber nicht zerkleinert werden. Bei der Friktionszentrifuge wird bevorzugt nass gearbeitet, d.h. den Rejekten wird Flüssigkeit hinzugegeben, um eine Überhitzung de Mahlgutes zu verhindern. Gleichzeitig hilft diese Flüssigkeit, die kleinen Störstoffe, wie Papieretiketten, Papierfasern und Sand etc. durch die Schlitze des liegenden Zentrifugenmantelzylinders auszutragen. Bei der Hammermühle trägt ein Luftstrom, der durch die Hammermühle geblasen wird, alle leichten Verunreinigungen aus dem System zu den Luftfiltern. Bei der Friktionszentrifuge kann trocken aber auch nass, d.h. unter Zugabe von Waschmedium, gereinigt werden. Bei der Hammermühle wird nur trocken gearbeitet.

Das aus Schritt 2 stammende Mahlgut wird einem Schritt 3 zugeführt, in der mittels einer Luftsichtung z.B. in einem bekanntem Zickzack-Sichter das Mahlgut in eine Leicht- und in eine Schwerfraktion geteilt wird.

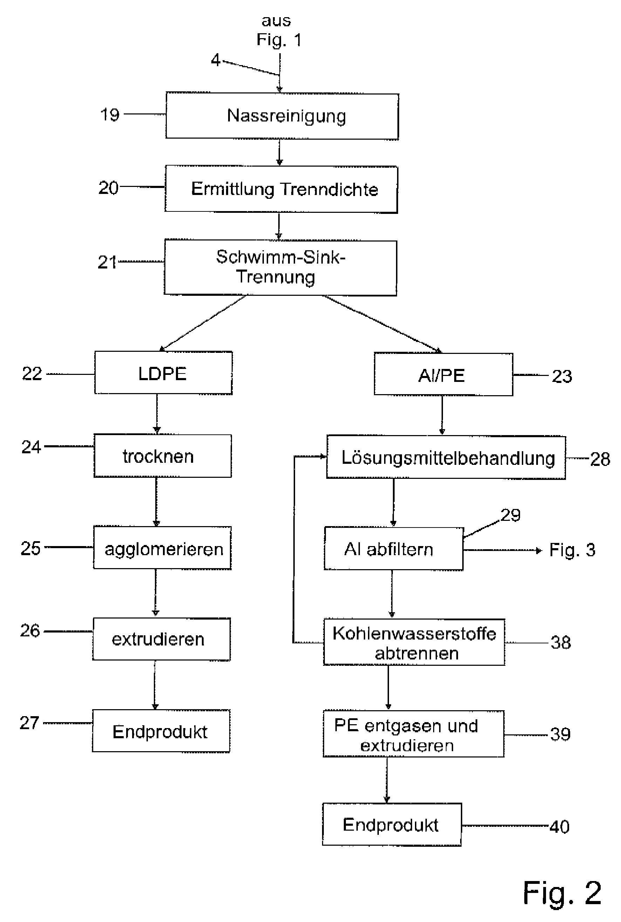

Mit der Leichtfraktion werden alle diejenigen Teilchen ausgetragen, die bei der eingestellten Luftgeschwindigkeit von dem Luftstrom nach oben ausgetragen werden. Das sind in der Regel alle Folienteilchen (LDPE- und AI/PE-Folien), dazu können aber auch einzelne Papierschnitzel, einzelne Papierfasern, Kork-und EPS-Teilchen sowie kleine Mahlgutteilchen aus der Fraktion der Hartkunststoffe gehören. Die Leichtfraktion wird in Zweig 4 der Fig. 1, die in Fig.2 behandelt wird, weiterverarbeitet.

In der Schwerfraktion sind die meisten Hartkunststoffe, schweren Störstoffe (z.B. Metallteilchen, Textilien, Mineralien, kleine Holzteilchen) sowie nicht aufgelöste Papierfaserknollen enthalten, die auftreten können, wenn eine Hammermühle eingesetzt wurde, deren Siebblechbohrungen zu groß waren. Die Schwerfraktion wird getrennt von der Leichtfraktion in Zweig 5 der Fig. 1 weiterverarbeitet.

In Schritt 6 werden zunächst störende, ausschließlich schwere Störstoffe 7 aus der Schwerfraktion abgetrennt, um nur die Hartkunststoffe 8 für eine weitere Verarbeitung zu separieren. Als Werkzeug für diese Störstoffabscheidung gibt es mehrere Möglichkeiten. Ein geeignetes Instrument für diese Aufgabe ist der so genannte ballistische Sichter. Eine zweite Möglichkeit bietet auch an dieser Stelle der Zick-Zack-Luftsichter, dessen Luftgeschwindigkeit in diesem Fall so eingestellt wird, dass nur die Hartkunststoffe als Leichtfraktion ausgetragen werden, nicht aber die Störstoffe. Ein drittes mögliches Hilfsmittel für diese Aufgabe ist ebenfalls eine Schwimm-Sink-Trennung. Weitere eventuell geeignete Maschinen sind dem Fachmann bekannt.

Eine hier bevorzugte sich anschließende Schwimm-Sink-Trennung der Hartkunststoffe weist insbesondere mit folgenden Erwägungen eine optimale Trennschärfe auf.

Die Teilchendichte von Kunststoffen setzt sich aus den Dichten seiner Bestandteile und deren Anteilen im jeweiligen Kunststoff zusammen, wenn man einmal von möglichen Vakuolen absieht. Bestandteile des Kunststoffs sind dessen Polymer sowie die schwankenden Additive/Zuschlagstoffe, die von Hersteller zu Hersteller und über der Zeit variieren können. Zudem können ohne Ankündigung durch den Hersteller neue Kunststoffsorten mit neuen Dichten eingesetzt werden. Daher wird erfindungsgemäß eine vorgegebene oder theoretisch ermittelte konstante Dichte, bei der das Haufwerk von Mahlgutteilchen aus Hartkunststoffen der Rejekte getrennt werden kann, nicht verwendet.

Stattdessen wird eine optimale Dichte für das Trennmedium in einem Schritt 9 empirisch ermittelt, und zwar zumindest zu Beginn der Trennung, um die höchst mögliche Reinheit der beiden zu trennenden Fraktionen zu erhalten.

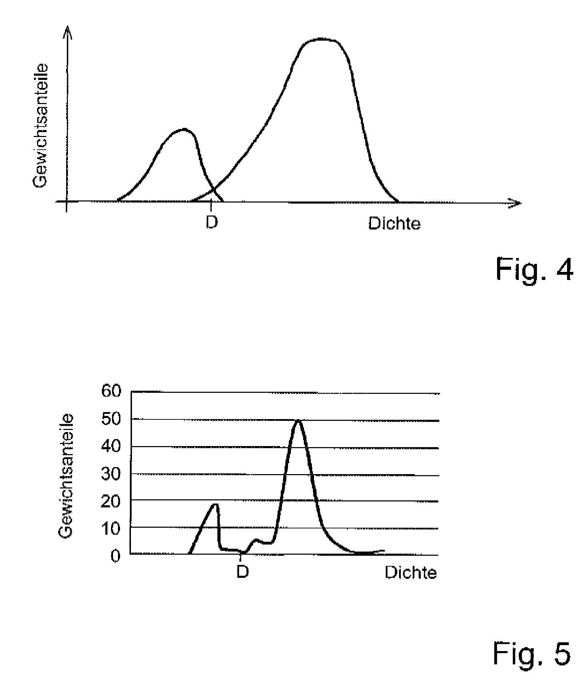

Hierzu wird zunächst die Dichteverteilungskurve der Hartkunststoffe 8 ermittelt. In Fig. 4 ist eine beispielhafte Dichteverteilungskurve von Hartkunststoffen 8, die mittels Luft-Zickzack-Sichter aus Getränkekartonrejekten abgetrennt worden sind, illustriert. In diesem Beispiel bestehen die Hartkunststoffe 8 aus PP-Hartkunststoffen und aus HDPE-Hartkunststoffen. Die Dichteverteilungskurven von PP und HDPE in der Probe schneiden sich an einer Stelle. Zur optimalen Trennung von PP und HDPE ist für das Trennmedium die Dichte D an dieser Stelle zu wählen.

Fig. 5 zeigt ein Beispiel einer gemessenen Dichteverteilung der Hartkunststoffe 8. Es ist ein breites Minimum zwischen den beiden Dichteverteilungskurven der wesentlichen Bestandteile PP- und HDPE der Hartkunststoffe 8 zu erkennen, nämlich bei der Dichte D. Die Dichtewerte in diesen Beispielen sind nicht quantitativ angegeben, da es hier nicht auf die konkreten Dichtewerte, die möglicherweise über der Zeit schwanken, ankommt, sondern allein auf die Charakteristik der Dichteverteilungskurve. Der Trennschnitt kann im Dichteminimum frei gewählt werden, im Falle besonderer Ansprüche an die Reinheit kann er jedoch mit Hilfe der Analyse der Zusammensetzung der Subfraktionen im Minimum zusätzlich optimiert werden.

Für die Trennung der Hartkunststoffteilchen in eine HDPE- und PP-Fraktion in Schritt 10 ist hier zwar vorzugsweise die aus der EP 1618960 B1 bekannte Vorrichtung zum Schwimm-Sink-Trennen verwendet, so dass eine Trennschärfe von bis zu 99,5% erhalten werden kann, jedoch können auch andere präzise Schwimm-Sink-Trennvorrichtungen, wie z.B. die Sortierzentrifuge von Flottweg, hierfür eingesetzt werden.

Auf die Entgasung der Suspension kann dabei in den Fällen verzichtet werden, in denen die Trennflüssigkeit wenig Luft löst, wenig oder kaum Luft bei der Suspensionsherstellung in das System eingebracht wird und die Trennflüssigkeit die Hartkunststoffteilchen sehr gut benetzt. In allen anderen Fällen ist zur Erzielung hoher Reinheitsgrade auch bei der Hartkunststoff-Schwimm-Sinktrennung die Entgasung der Suspension notwendig, um sicher zu stellen, dass auch nicht die kleinsten Luftblasen an den Mahlgutteilchen anhaften können, die sonst deren wirksame Dichte verfälschen und z.B. Schwerfraktionsteilchen wie ein Schwimmgürtel den Schwimmer an die Oberfläche aufschwimmen lassen.

Grundsätzlich kann für die Trennung der Hartkunststoffe der Getränkekartons wegen ihrer hellen Färbung durchaus alternativ auch eine Trennung mittels Nah-Infrarot-Trenntechnik in Frage kommen, wenn geringere Ansprüche an die Ausbeute (<95%) und an die Kunststoffreinheit(<96%) gestellt werden. Um die höchsten Reinheitsgrade (>97%% und >99%) und Ausbeuten (>97%) jedoch auch bei den Hartkunststoffen zu erreichen, ist auch bei dieser Fraktion der Einsatz einer präzisen Schwimm-Sink-Trenntechnik notwendig.

Das Mahlgut der PP und HDPE-Fraktionen 11, 12 aus dem Schritt 10 wird vorzugsweise zuerst mechanisch mittels Zentrifugen und dann thermisch getrocknet, Schritt 13, 14.

Um die Reinheit und Gleichmäßigkeit der Endprodukte zu steigern, können beide Fraktionen 11, 12 nach dem Trocknen mittels einem Extruder, der mit einem Schmelzefilter ausgestattet ist, nachgereinigt und gleichzeitig mit neuen Additiven ausgestattet werden.

Beide Mahlgüter können nach dem Trocknen in Schritt 15, 16 anstatt einem normalem Extruder auch einem Entgasungsextruder zugeführt werde, um z.B. lösliche Fremdchemikalien wie für eine Lebensmittelzulassung erforderlich, zu entfernen, und werden gewünschtenfalls granuliert. Die Granulate sind reine Wertstoffe und bilden hier die beiden Endprodukte 17, 18.

Unabhängig von der Verarbeitung der Schwerfraktion in Zweig 5 wird die die Kunststofffolien und die AI/PE-Verbundfolien umfassende Leichtfraktion in Zweig 4 wie folgt verarbeitet, vgl. Fig. 2. Hierbei ist es das Ziel, die AI/PE-Verbundfolie von den reinen LDPE-Folien zu trennen und bei hoher Ausbeute (>95%) eine sehr reine LDPE-Folienfraktion mit einem AI/PE-Verbundfoliengehalt < 2 Gew.-% zu gewinnen.

Die Leichtfraktion 4 kann zunächst einer Nass-Reinigung in Schritt 19 unterzogen werden, um Reststörstoffe zu entfernen. Für diesen Schritt gibt es gängige Verfahren.

Danach folgt ein Schwimm-Sink-Trenn-Prozess. Hierbei ist es das Ziel, die AI/PE-Verbundfolie von den reinen LDPE-Folien zu trennen. Zweckmäßigerweise werden dabei folgende Schritte für die Schwimm-Sink-Trennung ausgeführt: Die Leichtfraktion 4 wird in einem Trennmittel suspendiert und zum Entfernen von den Teilchen anhaftender Luft in eine Vakuumanlage gebracht. Die Dichte des Trennmittels ist so auszuwählen, Schritt 20, dass sich die AI/PE-Verbundfolie und die übrigen Kunststoffe aufgrund der unterschiedlichen Dichten trennen. Hierbei schwimmen die leichten Teile, also hier die rein polyolefinischen Kunststoffe, als Leichtfraktion auf, Schritt 22, während die schweren Teile, also hier die AI/PE-Verbundfolie, sinken, Schritt 23.

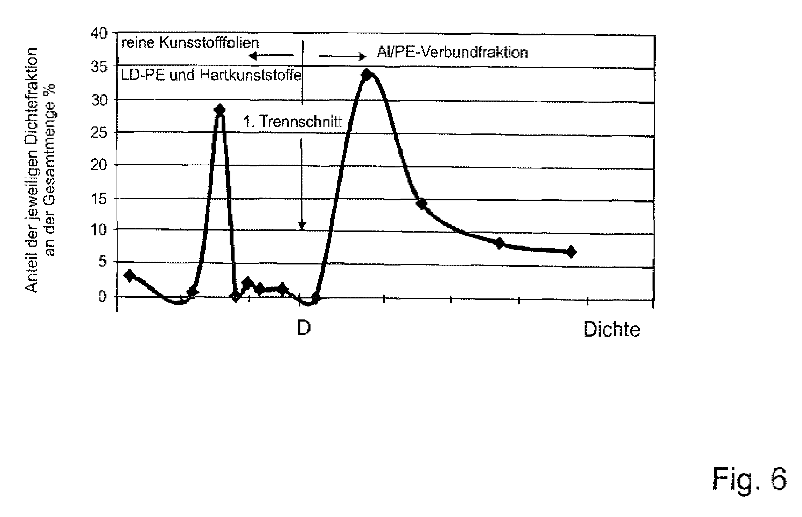

Dazu wird zunächst die Dichteverteilungskurve der zugeführten LPDE-AI/PE-Leichtfraktion 4 in Schritt 20 ermittelt. Dies kann erfolgen, indem die Dichte einer ausreichenden Anzahl von Teilchen einzeln gemessen wird, anschließend das Gewicht der Teilchen in einzelnen Dichtebereichen bestimmt und, gesetzt in ein Verhältnis zum Gesamtgewicht der Anzahl von Teilchen, in einem Diagramm aufgetragen wird, vgl. die karoförmigen Messpunkte der Fig. 6. Die Dichte am Schnittpunkt zwischen der Dichteverteilung der LDPE und der Dichteverteilung der AI/PE wird als Dichte für das Trennmedium gewählt.

Als Trennverfahren in Schritt 21 kommt bei diesem Folienmaterial nur ein Schwimm-Sink-Trennungsverfahren in Betracht. Auch hier gilt, dass das Schwimm-Sink-Verfahren nach EP 1618960 B1 für diese Trennung besonders gut geeignet ist. Notfalls kann jedoch auch bei einem Zweistufenverfahren in deren ersten Stufe, die dann mit Wasser und ohne Entgasung trennen würde, jede andere bekannte Schwimm-Sink-Trennungsvorrichtung eingesetzt werden. In der für die hohe Reinheit notwendigen zweiten Trennstufe dieser Anlage, in der die mit AI/PE-Verbundfolien verunreinigte Leichtfraktion dann nochmals getrennt werden müsste, um eine AI/PE-Verbundfolien-freie reine Kunststofffraktion zu erzielen, müsste dann mit dem erfindungsgemäßem Verfahren mit einer entgasten Suspension gearbeitet werden.

Zweckmäßigerweise werden bei dem erfindungsgemäßem Verfahren also folgende Schritte für die Schwimm-Sink-Trennung 21 ausgeführt: Die Leichtfraktion 4 wird in einem Trennmittel, dessen Dichte dem Schnittpunkt entspricht, der mit Hilfe der in Schritt 20 durchgeführten Ermittlung der beiden Dichteverteilungskurven der beiden Fraktionen ermittelt worden ist, suspendiert und zum Entfernen von den Teilchen anhaftender Luft z. B. in einen evakuierten Rührkessel eingebracht. Die Verweilzeit in diesem evakuierten Rührkessel sollte möglichst lange sein, mindestens jedoch 2 Minuten und bevorzugt 30 Minuten. Je niedriger der Unterdruck in dem evakuierten Rührkessel ist, umso kürzer kann die Verweilzeit sein.

Die gewonnene LDPE-Leichtfraktion aus den Polyolefinfolien wird wie bei den Hartkunststoffen mechanisch und insbesondere thermisch getrocknet, Schritt 24, bevor sie in Schritt 25 agglomeriert und schließlich in Schritt 26 zu Granulaten extrudiert werden. Dabei wird die Schmelze ebenfalls gefiltert und mit Additiven ausgerüstet. Die so hergestellten Granulate sind ein Wertstoff, der als Endprodukt 27 mit konstanter Qualität zur Verfügung steht.

Die Schwerfraktion, im vor liegendem Beispiel aus abgesunkener AI/PE-Verbundfolie, wird einer Lösemittelbehandlung unterzogen, Schritt 28, um PE-Anteile vom Aluminium zu lösen. Als Lösemittel wird vorzugsweise Cyclohexan verwendet.

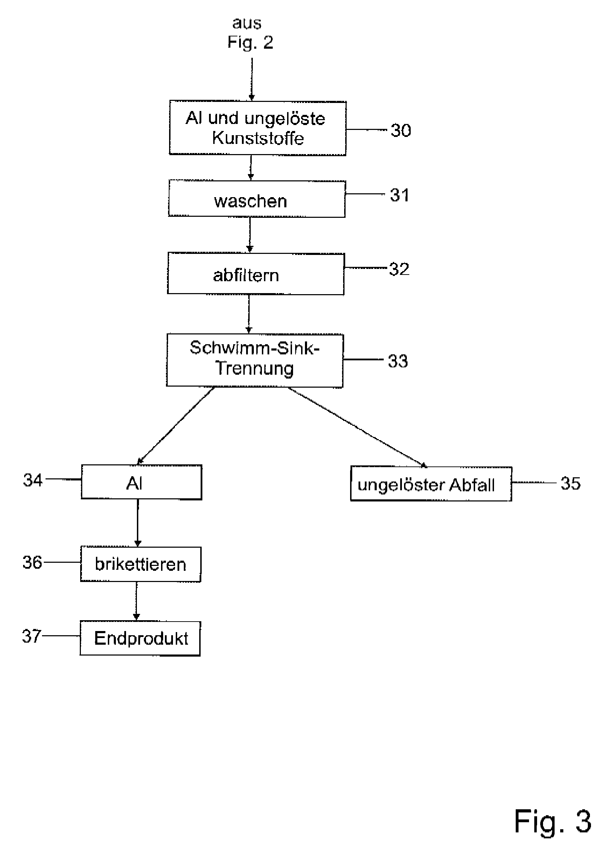

Nach Abfiltern, Schritt 29, des nicht gelösten Aluminium und etwaiger nicht gelöster Kunststoffe 30 (Fig. 3) werden das Aluminium und ggf. die nicht gelösten Kunststoffe 30, in Schritt 31 mit frischem Lösemittel gewaschen, erneut abgefiltert, Schritt 32. Danach wird in Schritt 33 das Aluminium 34 mit gängigen fest/flüssig Trennmethoden, bevorzugt Zentrifugen und/oder Dekantern, von ungelöstem Abfall 35 getrennt. Nach einer ggf. vorgesehenen Wäsche mit frischem Lösemittel gereinigt, bildet die Aluminiumfraktion 34 einen hochreinen Wertstoff. Sie enthält neben dem Aluminium zwar auch geringe Anteile an technischen Kunststoffen mit Dichten < 1 g/cm³ (z.B. Polyamid und PET), so dass es je nach deren Mengenanteil wirtschaftlich sinnvoll sein kann, in einer weiteren Schwimm-Sink-Trennung bei einer Dichte, die zwischen derjenigen des Al und derjenigen der Kunststoffanteile liegt, das Aluminium von diesen Störstoffen zu befreien. Das so behandelte Al liegt dann in einer Reinheit von bis zu 98% vor. Gegebenenfalls wird es zur sicheren Handhabung brikettiert, Schritt 36, und als Wertstoff-Endprodukt 37 bereitgestellt.

Die verbleibende Lösung wird beispielsweise zentrifugiert, um Restverunreinigungen zu entfernen, und es kann das Lösungsmittel, hier Cyclohexan, beispielsweise mittels einer Flash-Verdampfertechnik der Fa. Sulzer/Schweiz in einem Schritt 38 abgetrennt werden. Abgetrenntes Lösungsmittel wird gemäß Stand der Technik mittels Filtern und Destillation nachgereinigt, und es wird erfindungsgemäß dem Prozess zweckmäßigerweise in Schritt 28 wieder zugeführt.

Der Wertstoff PE bildet, ggf. nach Entgasen, Extrudieren und/oder Zugabe von Stabilisatoren gemäß Stand der Technik in Schritt 39, das Wertstoff-Endprodukt 40.

In einer zweiten Ausführungsform der Erfindung wird der Kunststoffabfall eingangs nicht in Hartkunststoffe einerseits und Verbundfolien und Folien andererseits, sondern in Hartkunststoffe und Folien einerseits und Verbundfolien andererseits getrennt. Die technischen Details der einzelnen Schritte können dabei wie vorstehend zur ersten Ausführungsform implementiert sein.

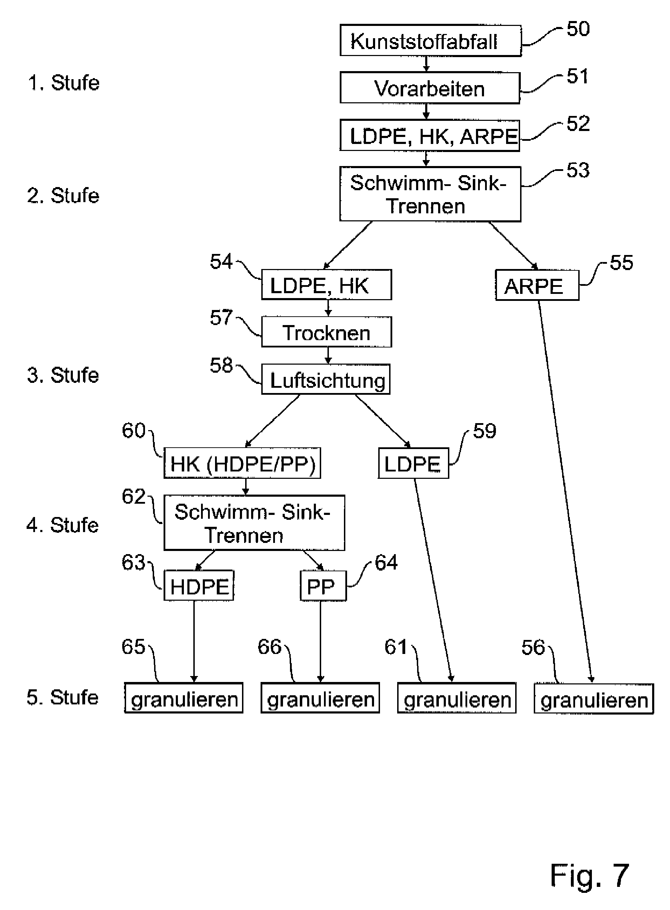

Den Ausgangspunkt 50, vgl. Fig. 7, bildet auch hier Kunststoffabfall.

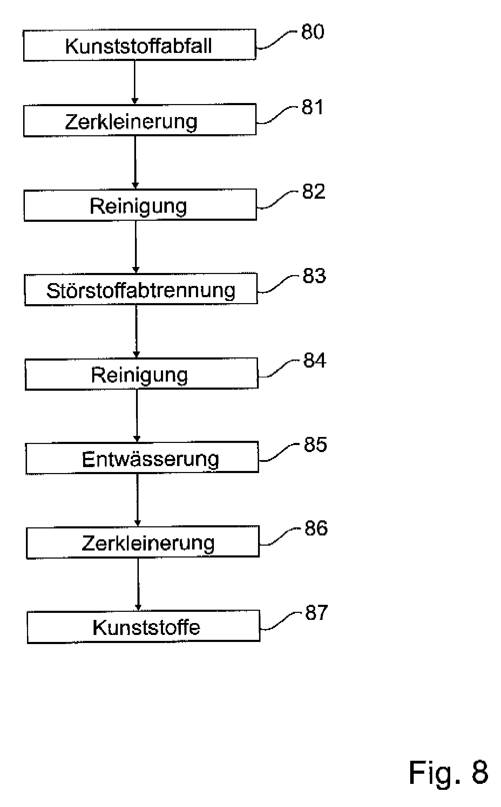

Der Kunststoffabfall wird zunächst in einer ersten Stufe Vorarbeiten 51 unterzogen. Die Vorarbeiten 51 werden nachfolgend unter Bezugnahme auf Fig. 8 beschrieben und können eine Zerkleinerung, eine Vereinzelung aller Elemente, eine trockene und/oder nasse Abtrennung von Störstoffen usw. umfassen. Es ist anzustreben, die Vorarbeiten so auszugestalten, dass jegliche organische und anorganische Störstoffe entfernt sind, insbesondere keine Papierfasern mehr vorhanden sind, und dass der Kunststoff möglichst klein gemahlen ist, um etwaige mechanische Verbindungen verschiedener Kunststoffe zu trennen, die bei groben Zerkleinerungsschritten entstanden sein können.

Am Ende der ersten Stufe liegen im Idealfall nur noch verwertbare Kunststoffe 52 vor, hier z.B. Hartkunststoffe (HK) der Kunststoffsorten HDPE und PP, Folien wie LDPE und Verbundfolien wie AIPE. Jegliche Papierfasern sind im Idealfall entfernt, da sie die nachfolgende Trennung stören.

In einer zweiten Stufe werden die verwertbaren Kunststoffe 52 vorzugsweise mittels Schwimm-Sink-Trennung 53 aufgeteilt in einerseits Hartkunststoffe HK und Folien 54 und andererseits Verbundfolien 55. Die Schwimm-Sink-Trennung erfolgt dabei vorzugsweise grundsätzlich identisch zu den vorstehend unter Bezugnahme auf Fig. 1, 2 und 3 beschrieben Schwimm-Sink-Trennungen 10, 21 bzw. 33 mit der Maßgabe, dass die Dichte des Trennmittels beispielsweise gem. Fig. 4, 5 und 6 auf die vorliegende Fraktion aus HK und Folien einerseits und Verbundfolien andererseits eingestellt wird. Die optimale Trennmitteldichte kann dabei mittels gemessener Dichteverteilungskurven eingestellt werden. So wird vorzugsweise die Dichteverteilungskurve der Fraktion der Hartkunststoffe und Folien einerseits und der Verbundfolien andererseits ermittelt, also gemessen. Der optimale Schnittpunkt wird dann aus der Kurve abgelegen. Dies ist vorstehend unter Bezugnahme auf die Fig. 6 beschrieben.

Das abgetrennte AIPE 55 kann anschließend getrocknet und zum Endprodukt granuliert 56 oder wie in Fig. 2 für das AIPE 23 dargestellt weiterverarbeitet werden.

Die Fraktion aus verbleibenden Hartkunststoffen und Folien 54 wird in einer dritten Stufe separat weiterverarbeitet, um die Folien von den Hartkunststoffen abzutrennen. Zwar kann dies ebenfalls mittels Schwimm-Sink-Trennung erfolgen; allerdings ist es vorteilhaft, statt dessen nach insbesondere mechanischem Trocknen 57 eine Luftsichtung 58 oder dergleichen durchzuführen, z.B. durch Beaufschlagung mit Luft die Folien aus den Hartkunststoffen quasi herauszublasen. Die leichten Folien LDPE 59 fliegen dabei auf, während die schweren Hartkunststoffe 60 zurückbleiben.

Die Folien 59 können dann zu einem Endprodukt getrocknet und granuliert 61 werden.

In einer vierten Stufe werden die Hartkunststoffe in ihre Kunststoffsorten geteilt. Auch für diesen Schritt wird vorzugsweise die bereits beschriebene Schwimm-Sink-Trennung 62 verwendet. Als Trennmedium kommt hier vorzugsweise ein Bioöl oder ein Wasser/Alkohol-Gemisch zum Einsatz. Diese Trennmedien sind besonders gut einstellbar auf die zu erwartenden Dichteverteilungskurven, günstig und die Einstellung kann einfach angepasst werden.

Es wird einerseits HDPE 63 und andererseits PP 64 erhalten, die schließlich zum Endprodukt getrocknet und granuliert 65, 66 werden können.

Anstelle des Trocknens und Granulierens können andere Endverarbeitungsschritte in allen Ausführungsformen vorgesehen sein; im einfachsten Fall wird das nasse Endprodukt einfach gesammelt.

Die in Fig. 8 detailliert dargestellte beispielhafte erste Stufe kann insgesamt oder in den einzelnen Schritten bei beiden Ausführungsformen des Verfahrens zum Reinigen, Zerkleinern und/oder Vereinzeln eingesetzt werden.

Ausgangsprodukt ist Kunststoffabfall 80. Dieser kann zerkleinert oder unzerkleinert vorliegen. Es kann ein erster Zerkleinerungsschritt 81 vorgesehen sein, in dem in einer Mahlanlage oder dergleichen der Kunststoffabfall 80 beispielsweise handtellergroß zerkleinert wird. Dieser Zerkleinerungsschritt 81 ist entbehrlich, wenn bereits grob zerkleinerter Kunststoffabfall 80 vorliegt.

Ein Reinigungsschritt 82 kann sich anschließen, um Papierfasern und Störstoffe wie Sand, Steine usw. zu entfernen. Dieser Reinigungsschritt kann eine Nassreinigung umfassen.

Eine sich anschließende Störstoffabtrennung 83 kann vorgesehen sein, beispielsweise als nasse Störstoffabtrennung in Form eines einfachen Schwimm-Sink-Beckens. In diesem Schwimm-Sink-Becken fallen anorganische Störstoffe wie FE, Ne, Steine, Erden usw. aus, während die Kunststoffe aufschwimmen. Hierzu kann eine Floatation vorgesehen sein, also eine Beaufschlagung mit Luft oder dergleichen, damit die Kunststoffe aufschwimmen.

Die Kunststoffe können anschließend gereinigt werden 84. Hierzu eignet sich eine Friktionswaschanlage, bei der gleichzeitig eine weitere Zerkleinerung und/oder Vereinzelung der Kunststoffe und ggf. Ablösung und/oder Vereinzelung noch vorhandener Papierfasern erfolgen kann.

Eine Entwässerung 85, z.B. in einer Friktionszentrifuge, kann sich anschließen.

Schließlich kann eine weitere Zerkleinerung 86 z.B. in einer Schneidmühle vorgesehen sein, sofern die gewünschte Größe der Kunststoffteilchen für das nachfolgende Trennverfahren nach einer beliebigen der erfindungsgemäßen Ausführungsformen noch nicht erreicht ist. Angestrebt werden möglichst kleine Kunststoffteilchen, z.B. kleiner als 30mm, insbesondere kleiner als 20mm, bevorzugt kleiner als 10mm, noch bevorzugter kleiner als 5mm und am besten kleiner als 3mm oder 2mm. Je kleiner die Kunststoffteilchen sind, desto geringer ist die Wahrscheinlichkeit, dass sie mit anderen Kunststoffteilchen insbesondere einer anderen Art oder Störstoffen wie etwa Papierfasern mechanisch verbunden sind; bei einer Größe von etwa 5mm bis etwa 10 oder 12mm ergeben sich erheblich bessere Ergebnisse als bei einer Größe oberhalb von 10 bzw. 12mm.

Die erfindungsgemäßen Verfahren können in einer Anlage durchgeführt werden, die Mittel zum Ausführen der einzelnen Verfahrensschritte aufweist.

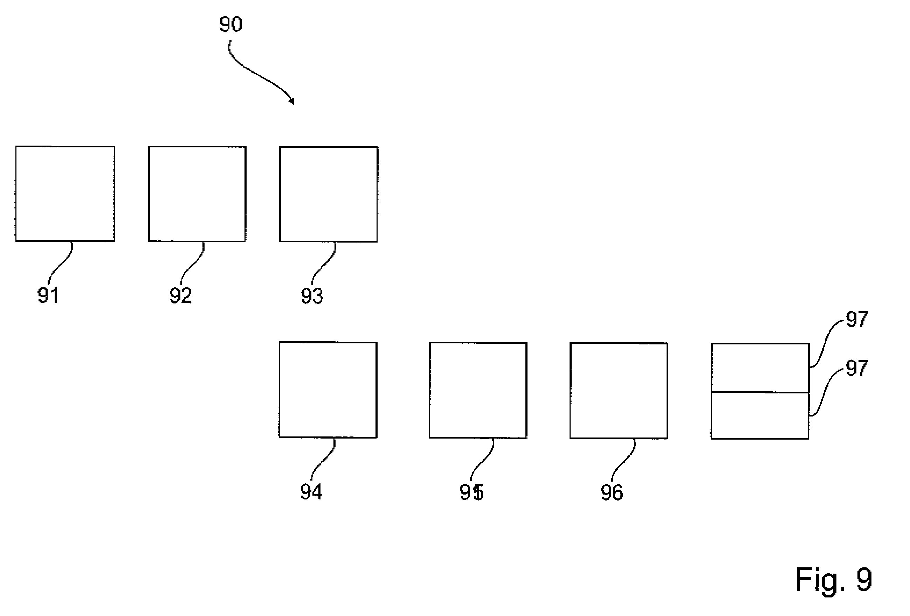

Eine beispielhafte Anlage 90 ist in Fig. 9 schematisch dargestellt. Die Anlage 90 kann das Verfahren gemäß Fig. 7, 8 durchführen.

Zum Zerkleinern, Reinigen, Vereinzeln und/oder Abtrennen von Störstoffen sind Mittel 91 vorgesehen, die eine Mahlanlage, ein Schwimm-Sink-Becken, eine Friktionswaschanlage, eine mechanische Entwässerungsvorrichtung und/oder eine Schneidmühle sowie ggf. weitere zweckmäßige Einrichtungen aufweisen können.

Eine Vorrichtung 92 zum Schwimm-Sink-Trennen, vorzugsweise gemäß EP 1618960 B1 oder ein Schwimm-Sink-Becken, ist zum Abtrennen 53 der Verbundfolien 55 von den Hartkunststoffen und Folien 54 vorgesehen.

Die Verbundfolien sind in einer entsprechenden Einrichtung 93 weiterverarbeitbar. Hierzu kann die Einrichtung 93 Mittel zum Trocknen und zum Granulieren aufweisen und/oder Mittel zum Durchführen des Astes 23 der Fig. 2.

Eine Trocknungsvorrichtung 94 und eine Luftsichtvorrichtung 95 können zur Abtrennung der Folien von den Hartkunststoffen vorgesehen sein. Die Folien sind in der Einrichtung 93 zum Endprodukt granulierbar oder es ist eine separate Einrichtung für die Folien vorgesehen.

Die Hartkunststoffe können in der Vorrichtung 92 zum Schwimm-Sink-Trennen mit neu eingestelltem Trennmedium in die einzelnen Kunststoffsorten getrennt werden oder es kann eine weitere Vorrichtung 96 zum Schwimm-Sink-Trennen der Hartkunststoffe vorgesehen sein.

Vorrichtungen 97 können zum Trocknen und Granulieren der einzelnen Hartkunststoffe vorgesehen sein.

Für einen hohen Durchsatz sind mehrere prozesstechnisch hintereinander geschaltete Vorrichtungen 92, 96 vorgesehen, die jeweils einen Trennschritt durchführen. Insbesondere können mehrere Vorrichtungen 92 und/oder 96 für den selben Trennschritt (Hartkunststoffe und Folien/Verbundfolien; Hartkunststoffe) vorgesehen sein, sofern der Trennschritt mehrstufig hintereinander durchgeführt werden soll für eine erhöhte Reinheit.

## Patentansprüche

1. Verfahren zum Abtrennen einzelner Wertstoffe aus gemischtem, insbesondere zerkleinertem Kunststoffabfall, der Folien-, Verbundfolien- und Hartkunststoffteile sowie gegebenenfalls Störstoffe enthält, bei dem
etwaige Störstoffe vom Kunststoffabfall (50) abgetrennt (51) werden,
der Kunststoffabfall in Hartkunststoffe und Folien (54) einerseits und Verbundfolien (55) andererseits getrennt (53) wird,
die Hartkunststoffe (60) von den Folien (59) getrennt (58) werden,
die Hartkunststoffe (60) in ihre Kunststoffsorten (63, 64) getrennt (62) werden, und
wenigstens ein Trennschritt eine Schwimm-Sink-Trennung (53, 62) umfasst.

2. Verfahren nach Anspruch 1, bei dem die Hartkunststoffe und Folien einerseits und die Verbundfolien andererseits mittels Schwimm-Sink-Trennung getrennt werden und hierfür die optimale Trennmitteldichte mittels einer gemessenen Dichteverteilungskurve der Fraktion der Hartkunststoffe und Folien, und/oder der Fraktion der Verbundfolien, eingestellt wird.

3. Verfahren nach Anspruch 1 oder 2, bei dem die Hartkunststoffe von den Folien mittels Luftsichtung (58) oder mittels Schwimm-Sink-Trennung getrennt werden und hierfür die optimale Trennmitteldichte mittels einer gemessenen Dichteverteilungskurve der Fraktion der Hartkunststoffe und/oder der Fraktion der Folien eingestellt wird.

4. Verfahren nach einem der Ansprüche 1 bis 3, bei dem die Hartkunststoffe in ihre Kunststoffsorten mittels Schwimm-Sink-Trennung getrennt werden und hierfür die optimale Trennmitteldichte mittels einer gemessenen Dichteverteilungskurve der Fraktion wenigstens einer Kunststoffsorte der Hartkunststoffe eingestellt wird.

5. Verfahren nach einem der Ansprüche 1 bis 4, bei dem die Trennung der Störstoffe von den Kunststoffen umfasst: eine mechanische Abtrennung von Papierfasern; und/oder eine Trennung in einem Schwimm-Sink-Becken, zum Abtrennen anorganischer Störstoffe.

6. Verfahren zum Abtrennen einzelner Wertstoffe aus gemischtem, insbesondere zerkleinertem Kunststoffabfall (1), der Folien, Verbundfolien und Hartkunststoffteile sowie gegebenenfalls Störstoffe enthält, bei dem der Kunststoffabfall mittels Luftsichtung in Folien und Verbundfolien einerseits und Hartkunststoffe andererseits getrennt werden,
wobei das Verfahren die folgenden weiteren Trennschritte umfasst, von denen wenigstens einer eine Schwimm-Sink-Trennung umfasst:
etwaige Störstoffe werden vom Kunststoffabfall abgetrennt,
die Verbundfolien werden von den Folien getrennt, und
die Hartkunststoffe werden in ihre Kunststoffsorten getrennt.

7. Verfahren nach Anspruch 6, bei dem der Kunststoffabfall mittels Luftsichtung (3) in die Fraktion der Hartkunststoffe (5) als Schwerfraktion und die Fraktion der Folien inklusive der Verbundfolien als Leichtfraktion (4) getrennt wird, die Fraktion der Hartkunststoffe (5) mittels Schwimm-Sink-Trennung (10) in ihre reinen Kunststoffsorten aufgeteilt wird und hierfür die optimale Trennmitteldichte mittels einer gemessenen Dichteverteilungskurve der Fraktion der Hartkunststoffe (5) eingestellt wird (9), und die Fraktion der Folien und Verbundfolien (4) mittels Schwimm-Sink-Trennung (21) voneinander getrennt werden und hierfür die optimale Trennmitteldichte mittels einer gemessenen Dichteverteilungskurve der Fraktion der Folien und Verbundfolien (4) eingestellt wird (20).

8. Verfahren nach einem der Ansprüche 1 bis 7, bei dem der Kunststoffabfall einer trockenmechanischen Vereinzelungsvorrichtung zugeführt wird, die die Folien und Verbundfolien von den Hartkunststoffteilen mechanisch separiert und störende Verunreinigungen abtrennt.

9. Verfahren nach einem der Ansprüche 1 bis 8, bei dem die mittels Schwimm-Sink-Trennung zu trennenden Teilchen in einer entgasten Suspension der Vorrichtung zum Schwimm-Sink-Trennen zugeführt werden.

10. Verfahren nach einem der Ansprüche 1 bis 9, bei dem zumindest eine Schwimm-Sink-Trennung mehrstufig ausgeführt wird.

11. Verfahren einem der Ansprüche 1 bis 10, bei dem die Dichteverteilungskurve durch Messen der Dichte einer Anzahl von Teilchen aus der zu trennenden Menge von Teilchen ermittelt wird und die optimale Trennmitteldichte (D) im Schnittpunkt der Dichteverteilung der Leichtfraktion und der Dichteverteilung der Schwerfraktion liegt.

12. Verfahren nach einem der Ansprüche 1 bis 11, bei dem Metall-Kunststoff-Verbunde und/oder Kunststofffraktionen aus einer vorgeschalteten Kunststofftrennung einer Lösemittelbehandlung (28) unterzogen werden, in der nur eine Kunststoffkomponente selektiv gelöst und damit von der(den) Metall- oder weiteren Kunststoffkomponente(n) abgetrennt und zurückgewonnen wird.

13. Verfahren nach einem der Ansprüche 1 bis 12, bei dem der Kunststoffabfall mittels Mahlung (2) auf eine Teilchengröße kleiner als 40 mm zerkleinert wird.

14. Verfahren nach einem der Ansprüche 1 bis 13, bei dem der erhaltene Wertstoff abschließend granuliert (15, 16) und/oder extrudiert (26, 39) wird.

15. Verfahren nach einem der Ansprüche 1 bis 14, bei dem die Fraktion der Hartkunststoffe (5) mittels einer nachgeschalteten Trennstufe (6) von den zuvor mit abgetrennten schweren Störstoffen (7) gereinigt wird.

16. Anlage (90) zum Abtrennen einzelner Wertstoffe aus gemischtem, insbesondere zerkleinertem Kunststoffabfall, der Folien, Verbundfolien und Hartkunststoffteile sowie gegebenenfalls Störstoffe enthält, **dadurch gekennzeichnet, dass** sie zur Durchführung des Verfahrens nach einem der Ansprüche 1 bis 5 und 8 bis 15 konfiguriert ist und
eine Einrichtung (91) zum Abtrennen von Störstoffen von den Kunststoffen, eine Einrichtung (92) zum Abtrennen von Hartkunststoffen und Folien einerseits von den Verbundfolien andererseits,
eine Einrichtung (94) zum Abtrennen der Hartkunststoffe von den Folien, und eine Einrichtung (96) zum Trennen der Hartkunststoffe in ihre Kunststoffsorten umfasst, wobei
wenigstens eine der Einrichtungen eine Schwimm-Sink-Trennvorrichtung umfasst,
wobei die Einrichtungen (91, 92, 94, 96) zur Durchführung des Verfahrens konfiguriert und hintereinander geschaltet sind.

## Claims

1. A method for separating individual valuable materials from mixed, in particular milled, plastic waste, which comprises film parts, laminated film parts and hard plastic parts, and optionally impurities, wherein
any impurities are separated (51) from the plastic waste (50),
the plastic waste is separated (53) into hard plastics and films (54) on the one hand and laminated films (55) on the other hand,
the hard plastics (60) are separated (58) from the films (59),
the hard plastics (60) are separated (62) into their plastic types (63, 64), and
at least one separation step comprises a sink-or-float separation (53, 62).

2. The method according to claim 1, wherein the hard plastics and films on the one hand and the laminated films on the other hand are separated by means of sink-or-float separation and, for this purpose, the optimum density of the separation medium is adjusted by means of a measured density distribution curve of the fraction of the hard plastics and films and/or the fraction of the laminated films.

3. The method according to claim 1 or 2, wherein the hard plastics are separated from the films by means of air sifting (58) or by means of sink-or-float separation and, for this purpose, the optimum density of the separation medium is adjusted by means of a measured density distribution curve of the fraction of the hard plastics and/or the fraction of the films.

4. The method according to any one of claims 1 to 3, wherein the hard plastics are separated into their plastic types by means of sink-or-float separation and, for this purpose, the optimum density of the separation medium is adjusted by means of a measured density distribution curve of the fraction of at least one type of plastic of the hard plastics.

5. The method according to any one of claims 1 to 4, wherein the separation of the impurities from the plastics comprises: a mechanical separation of paper fibers; and/or a separation in a sink-or-float tank for the separation of inorganic impurities.

6. The method for separating individual valuable materials from mixed, in particular milled, plastic waste (1), which comprises films, laminated films and hard plastic parts, and optionally impurities, wherein the plastics waste is separated by means of air sifting into films and laminated films on the one hand and hard plastics on the other hand,
wherein the method comprises the following separation steps, of which at least one comprises a sink-or-float separation:
any impurities are separated from the plastic waste,
the laminated films are separated from the films, and
the hard plastics are separated into their plastic types.

7. The method according to claim 6, wherein the plastic waste is separated by means of air sifting (3) into the fraction of the hard plastics (5) as a heavy fraction and the fraction of the films including the laminated films as a light fraction (4),
the fraction of the hard plastics (5) is separated into its pure plastic types by means of sink-or-float separation (10) and, for this purpose, the optimum density of the separation medium is adjusted (9) by means of a measured density distribution curve of the fraction of the hard plastics (5), and
the fraction of the films and laminated films (4) are separated from one another by means of sink-or-float separation (21) and, for this purpose, the optimum density of the separation medium is adjusted (20) by means of a measured density distribution curve of the fraction of the films and laminated films (4).

8. The method according to any one of claims 1 to 7, wherein the plastic waste is fed to a dry-mechanical isolating device, which separates mechanically the films and laminated films from the hard plastic parts and separates interfering impurities.

9. The method according to any one of claims 1 to 8, wherein the particles to be separated by means of sink-or-float separation are fed in a degassed suspension to the device for the sink-or-float separation.

10. The method according to any one of claims 1 to 9, wherein at least one sink-or-float separation is carried out in a multi-stage manner.

11. The method according to any one of claims 1 to 10, wherein the density distribution curve is determined by measuring the density of a number of particles from the quantity of particles to be separated, and the optimum density (D) of the separation medium lies at the point of intersection of the density distribution of the light fraction and the density distribution of the heavy fraction.

12. The method according to any one of claims 1 to 11, wherein metal-plastic composites and/or plastic fractions from an upstream plastics separation undergo a solvent treatment (28), in which only one plastic component is selectively dissolved and therefore separated and recovered from the metal component(s) or further plastic component(s).

13. The method according to any one of claims 1 to 12, wherein the plastic waste is milled by means of grinding (2) to a particle size smaller than 40 mm.

14. The method according to any one of claims 1 to 13, wherein the obtained valuable material is subsequently granulated (15, 16) and/or extruded (26, 39).

15. The method according to any one of claims 1 to 14, wherein the fraction of the hard plastics (5) is purified, by means of a downstream separation stage (6), from the heavy impurities (7) jointly separated beforehand.

16. An installation (90) for separating individual valuable materials from mixed, in particular milled, plastic waste, comprising films, laminated films and hard plastic parts, and optionally impurities, **characterized in that** the installation is configured for carrying out the method according to any one of claims 1 to 5 and 8 to 15 and comprises
a device (91) for separating impurities from the plastics,
a device (92) for separating hard plastics and films on the one hand from the laminated films on the other hand,
a device (94) for separating the hard plastics from the films, and
a device (96) for separating the hard plastics into their plastic types, wherein
at least one of the devices comprises a sink-or-float separation device,
wherein the devices (91, 92, 94, 96) are configured for carrying out the method and are connected in series.

## Revendications

1. Procédé pour la séparation de différentes matières valorisables à partir de déchets plastiques mélangés, en particulier broyés, contenant des morceaux de film, de film composite et de plastique dur, et éventuellement des impuretés, dans lequel
les éventuelles impuretés sont séparées (51) d'avec les déchets plastiques (50),
les déchets plastiques sont séparés (53) en plastiques durs et films (54) d'une part et en films composites (55) d'autre part,
les plastiques durs (60) sont séparés (58) d'avec les films (59),
les plastiques durs (60) sont classés (62) en types de plastique (63, 64), et
au moins une étape de séparation comprend une séparation par flottaison-sédimentation (53, 62).

2. Procédé selon la revendication 1, dans lequel les plastiques durs et films d'une part et les films composites d'autre part sont séparés à l'aide d'une séparation par flottaison-sédimentation, et pour ce faire, la densité optimale de l'agent de séparation est ajustée à l'aide d'une courbe de distribution mesurée de la densité de la fraction des plastiques durs et des films, et/ou de la fraction des films composites.

3. Procédé selon la revendication 1 ou la revendication 2, dans lequel les plastiques durs sont séparés des films à l'aide d'un criblage pneumatique (58) ou à l'aide d'une séparation par flottaison-sédimentation et pour ce faire, la densité optimale de l'agent de séparation est ajustée à l'aide d'une courbe de distribution mesurée de la densité de la fraction des plastiques durs et/ou de la fraction des films.

4. Procédé selon l'une des revendications 1 à 3, dans lequel les plastiques durs sont classés par types de plastique à l'aide d'une séparation par flottaison-sédimentation, et pour ce faire, la densité optimale de l'agent de séparation est ajustée à l'aide d'une courbe de distribution mesurée de la densité de la fraction d'au moins un type de plastique des plastiques durs.

5. Procédé selon l'une des revendications 1 à 4, dans lequel la séparation des impuretés d'avec les plastiques comprend : une séparation mécanique de fibres de papier ; et/ou une séparation dans un bassin de flottaison-sédimentation, pour la séparation d'impuretés inorganiques.

6. Procédé pour la séparation de différentes matières valorisables à partir de déchets plastiques (1) mélangés, en particulier broyés, contenant des films, films composites et morceaux de plastique dur, ainsi que des impuretés, dans lequel
les déchets plastiques sont séparés en films et en films composites d'une part et en plastiques durs d'autre part à l'aide d'un procédé de séparation pneumatique,
le procédé comprenant les étapes de séparation supplémentaires suivantes, parmi lesquelles au moins l'une comprend une séparation par flottaison-sédimentation :
les éventuelles impuretés sont séparées d'avec les déchets plastiques,
les films composites sont séparés d'avec les films, et
les plastiques durs sont classés par types de plastiques durs.

7. Procédé selon la revendication 6, dans lequel
les déchets plastiques sont séparés par séparation pneumatique (3) en la fraction des plastiques durs (5) en tant que fraction lourde et en la fraction des films, y compris les films composites, en tant que fraction légère (4),
la fraction des plastiques durs (5) est classée par types de plastiques purs à l'aide d'une séparation par flottaison-sédimentation (10), et pour ce faire, la densité optimale de l'agent de séparation est ajustée (9) à l'aide d'une courbe de répartition mesurée de la densité de la fraction des plastiques durs (5), et
la fraction des films et des films composites (4) est séparée à l'aide d'une séparation par flottaison-sédimentation (21), et pour ce faire, la densité optimale de l'agent de séparation est ajustée (20) à l'aide d'une courbe de répartition mesurée de la densité de la fraction des films et films composites (4).

8. Procédé selon l'une des revendications 1 à 7, dans lequel les déchets plastiques sont alimentés vers un dispositif de tri mécanique à sec, lequel sépare mécaniquement les films et films composites d'avec les morceaux de plastique dur et sépare les impuretés gênantes.

9. Procédé selon l'une des revendications 1 à 8, dans lequel les particules à séparer à l'aide d'une séparation par flottaison-sédimentation sont alimentées vers le dispositif dans une suspension dégazée pour la séparation par flottaison-sédimentation.

10. Procédé selon l'une des revendications 1 à 9, dans lequel au moins une séparation par flottaison-sédimentation est effectuée à plusieurs niveaux.

11. Procédé selon l'une des revendications 1 à 10, dans lequel la courbe de répartition de l'agent de séparation est déterminée en mesurant la densité d'un nombre de particules à partir de la quantité de particules à séparer, et la densité optimale de l'agent de séparation (D) se trouve au point d'intersection de la répartition de la densité de la fraction légère et de la répartition de la densité de la fraction lourde.

12. Procédé selon l'une des revendications 1 à 11, dans lequel des composites métal-plastique et/ou des fractions plastiques sont extraits à partir d'une séparation de plastique en amont dans le cadre d'un traitement au solvant (28), dans lequel seul un composant plastique est dissous de manière sélective et ainsi séparé du/des composant(s) métallique(s) ou du/des autre(s) composant(s) plastiques et récupéré.

13. Procédé selon l'une des revendications 1 à 12, dans lequel les déchets plastiques sont fragmentés par broyage (2) pour atteindre une taille de particules inférieure à 40 mm.

14. Procédé selon l'une des revendications 1 à 13, dans lequel la matière valorisable obtenue est ensuite granulée (15, 16) et/ou extrudée (26, 39).

15. Procédé selon l'une des revendications 1 à 14, dans lequel la fraction des plastiques durs (5) est débarrassée des impuretés lourdes (7) séparées conjointement auparavant, à l'aide d'une étape de séparation en aval (6).

16. Installation (90) pour la séparation de différentes matières valorisables, à partir de déchets plastiques mélangés, en particulier broyés, contenant des morceaux de film, de film composite et de plastique dur, et éventuellement des impuretés, **caractérisée en ce qu'**elle est configurée pour l'exécution du procédé selon l'une des revendications 1 à 5 et 8 à 15, et **en ce qu'**elle comprend
un dispositif (91) conçu pour séparer des impuretés d'avec les matières plastiques,
un dispositif (92) conçu pour séparer des plastiques durs et des films d'une part d'avec les films composites d'autre part,
un dispositif (94) conçu pour séparer les plastiques durs d'avec les films, et
un dispositif (96) conçu pour classer les plastiques durs par types de plastiques, dans laquelle
au moins l'un des dispositifs comprend un dispositif de séparation par flottaison-sédimentation,
dans laquelle les dispositifs (91, 92 94, 96) sont configurés pour l'exécution du procédé et montés en série.
